# EUROPÄISCHE PATENTANMELDUNG

(11) **EP 4 066 625 A1**
(43) Veröffentlichungstag der Anmeldung: **05.10.2022**
(21) Anmeldenummer: 22159444.3
(22) Anmeldetag: 01.03.2022
(51) Int. Cl.: A01G 13/02

(54) **PFLANZENSCHUTZHÜLLE**

(30) Priorität: 03.03.2021 AT 501522021
(71) Anmelder: WITASEK Pflanzenschutz GmbH, 9560 Feldkirchen (Ktn.) (AT)
(72) Erfinder: WITASEK, Peter, 9560 Feldkirchen (AT)
(74) Vertreter: Beer & Partner Patentanwälte KG

(57) **Zusammenfassung**

Die Erfindung betrifft eine Pflanzenschutzhülle (1) in Form eines rohrförmigen Körpers besteht aus einem Zuschnitt (2) aus blattförmigem Werkstoff, dessen Enden (5) zum Bilden des rohrförmigen Körpers miteinander verbunden sind. Um die Enden (5) des Zuschnittes (2) miteinander zu verbinden, sind Kupplungen (12) in Form von Klammern (14) vorgesehen, die durch miteinander fluchtende Löcher (10) in den Enden (5) des Zuschnittes (1) greifen. Ein Schenkel (15) der Klammer (14) liegt von innen her an der Wand der Pflanzenschutzhülle (1) an. Der andere Schenkel (16) der Klammer (14) liegt an der Außenseite der Wand der Pflanzenschutzhülle (1) an. An dem äußeren Schenkel (15) ist eine Einrichtung (20) zum Befestigen der Kupplung (12) und damit der Pflanzenschutzhülle (1) an einem Stab, insbesondere einem Pflanzstab, vorgesehen. Die Einrichtung (20) ist so ausgebildet, dass sie es erlaubt, dass die Kupplung (12), und damit die Pflanzenschutzhülle, durch Aufschnappen mit dem Stab, insbesondere dem Pflanzstab, verbunden wird.

## Beschreibung

Die Erfindung betrifft eine Pflanzenschutzhülle, umfassend einen rohrförmigen Körper, der aus wenigstens einem Zuschnitt aus blattförmigem Werkstoff besteht, wobei die Endbereiche des Zuschnittes miteinander unter Bilden des rohrförmigen Körpers verbunden sind.

Die Erfindung erstreckt sich auch auf das Verwenden erfindungsgemäßer Kupplungen, die mit einer Einrichtung zum Befestigen der Pflanzenschutzhülle ausgestattet sind, zum Festlegen einer bereits zu einer Röhre geschlossenen Pflanzenschutzhülle oder einer als Röhre ausgebildeten Pflanzenschutzhülle, z.B. einer Baumschutzhülle aus Gitter, an einem Stab, wie einem Pflanzstab. Bei einer solchen Verwendung wird wenigstens eine Kupplung in einem Loch in der Röhre der Pflanzenschutzhülle so festgelegt, dass die Einrichtung zum Befestigen eines Pflanzstabes von der Pflanzenschutzhülle nach außen absteht.

Derartige Pflanzenschutzhüllen sind bekannt, in welchem Zusammenhang beispielhaft auf AT 12 496 U1, AT 12 562 U1 und AT 14 008 U1 verwiesen werden kann.

Für das Schließen der Zuschnitte aus blattförmigem Werkstoff sind bei den bekannten Pflanzenschutzhüllen Laschen vorgesehen, die in Schlitze eingesteckt werden, um den Zuschnitt zu einem rohrförmigen Körper mit prismatischem oder rundem Querschnitt zu schließen.

Die bekannten Einrichtungen zum Schließen des Zuschnittes zu einem rohrförmigen Körper sind problematisch, da sie nicht nur aufwendig herzustellen sind, sondern auch oft unrichtig geschlossen werden, sodass sich Pflanzenschutzhüllen öffnen, und von den Pflanzen, die sie schützen sollten, durch Wind weggeblasen werden können.

Aus EP 0 230 767 A1 sind zwei Ausgestaltungen einer Pflanzenschutzhülle bekannt, die jeweils einen rohrförmigen Körper umfassen, der aus wenigstens einem Zuschnitt aus blattförmigem Werkstoff besteht, wobei Enden des Zuschnittes miteinander unter Bilden des rohrförmigen Körpers verbunden sind. In den Bereichen der miteinander verbundenen Enden des Zuschnittes ist wenigstens je ein Loch vorgesehen, wobei die Löcher miteinander fluchten und wobei in die Löcher eine Kupplung, die die Enden miteinander verbindet, eingesetzt ist.

Aus US 2014/208645 A1 ist eine rohrförmige Pflanzenschutzhülle aus blattförmigem Werkstoff bekannt, wobei die Kupplung, die in die miteinander fluchtenden polygonalen Löcher eingesetzt ist, nach Art einer Klammer (Heftklammer) ausgebildet ist.

US 2018/332779 A1 beschreibt eine rohrförmige Pflanzenschutzhülle aus blattförmigem Werkstoff, wobei die Kupplung, die in miteinander fluchtende polygonale Löcher eingesetzt ist, nach Art einer Klammer (vgl. Abs. [0042] ausgebildet ist.

Der Erfindung liegt die Aufgabe zugrunde, eine Pflanzenschutzhülle der eingangs genannten Gattung zur Verfügung zu stellen, mit welcher das Schließen des Zuschnittes aus blattförmigem Werkstoff zu einem rohrförmigen Körper einfach und sicher möglich ist.

Gelöst wird diese Aufgabe erfindungsgemäß mit einer Pflanzenschutzhülle, welche die Merkmale von Anspruch 1 aufweist.

Bevorzugte und vorteilhafte Ausgestaltungen der erfindungsgemäßen Pflanzenschutzhülle sind Gegenstand der Unteransprüche.

Da bei der erfindungsgemäßen Pflanzenschutzhülle im Bereich der miteinander zu verbindenden Enden des Zuschnittes Löcher vorgesehen sind, die miteinander bei zu dem rohrförmigen Körper geschlossenem Zuschnitt fluchten, kann in die Löcher eine Kupplung eingesetzt werden, die die Enden des Zuschnittes miteinander verbindet.

Dabei kann vorgesehen sein, dass insbesondere bei längeren (höheren) Pflanzenschutzhüllen über die Längserstreckung (Höhe) der Pflanzenschutzhülle verteilt in jedem Endbereich des Zuschnittes zwei oder mehr als zwei Löcher vorgesehen sind.

Das Schließen des Zuschnittes zu dem rohrförmigen Körper gelingt besonders einfach, wenn die Kupplung nach Art einer Klammer ausgebildet ist. Dabei ist bevorzugt, wenn die Klammer einen an der Außenseite des rohrförmigen Körpers anliegenden Schenkel und einen an der Innenseite des rohrförmigen Körpers anliegenden Schenkel aufweist und mit ihrem Steg an dem beispielsweise unteren Rand der miteinander fluchtenden Löcher anliegt.

Mit Hilfe der bei der erfindungsgemäßen Pflanzenschutzhülle vorgesehenen Kupplung können die Löcher aufweisenden Endbereiche des Zuschnittes einander überlappend miteinander verbunden werden.

In einer Weiterbildung der erfindungsgemäßen Pflanzenschutzhülle ist vorgesehen, dass der Kupplung eine von dem rohrförmigen Körper nach außen abstehende Einrichtung zum Befestigen eines Stabes, insbesondere eines Pflanzstabes, vorgesehen ist.

Ein derartiger Pflanzstab kann beispielsweise ein Pflanzstab sein, wie er aus AT 16 376 U2 bekannt ist.

Für die Einrichtung zum Befestigen des Stabes gibt es verschiedene Ausführungsformen. So kann die Einrichtung nach Art eines Klipps oder in Form eines Ringes, der von der Kupplung nach außen absteht, ausgebildet sein. Bevorzugt ist die Ausführungsform, bei welcher die Einrichtung zum Befestigen eines Stabes zwei Ansätze mit Haken bildenden Vorsprüngen aufweist, wobei es vorteilhaft ist, wenn die die Haken bildende Vorsprünge tragenden Ansätze elastisch verformbar sind. So kann ein Pflanzstab unter elastischem Verformen der Ansätze in die Einrichtung zum Befestigen eines Stabes eingeschnappt werden (Funktion des Klipp) und ist so sicher an der Pflanzenschutzhülle festgelegt, was den Vorteil hat, dass die Pflanzenschutzhülle auch bei jüngeren, schwächeren Pflanzen einen sicheren Stand hat.

Wenn die Einrichtung zum Befestigen des Stabes an der Kupplung der erfindungsgemäßen Pflanzenschutzhülle ein Ring ist, ist es bevorzugt, wenn die Achse des Loches des Ringes zur Längserstreckung der Pflanzenschutzhülle parallel ist. In einer bevorzugten Ausführungsform kann der Ring durch eine quer zur Längserstreckung des rohrförmigen Körpers ausgerichtete Platte, in der ein den Ring ergebendes Loch vorgesehen ist, gebildet sein.

In einer Ausführungsform der erfindungsgemäßen Pflanzenschutzhülle kann vorgesehen sein, dass über die Längserstreckung der Pflanzenschutzhülle verteilt im Bereich der Enden des Zuschnittes je wenigstens zwei Löcher vorgesehen sind.

In einer Ausführungsform der erfindungsgemäßen Pflanzenschutzhülle kann vorgesehen sein, dass die Löcher polygonale Löcher sind.

In einer Ausführungsform der erfindungsgemäßen Pflanzenschutzhülle kann vorgesehen sein, dass die Löcher rechteckige oder quadratische Löcher sind.

In einer Ausführungsform der erfindungsgemäßen Pflanzenschutzhülle kann vorgesehen sein, dass die Kupplung nach Art einer Klammer ausgebildet ist.

In einer Ausführungsform der erfindungsgemäßen Pflanzenschutzhülle kann vorgesehen sein, dass die Klammer einen an der Außenseite des rohrförmigen Körpers der Pflanzenschutzhülle anliegenden Schenkel, einen an der Innenseite des rohrförmigen Körpers der Pflanzenschutzhülle anliegenden Schenkel und einen an den Rändern der Löcher anliegenden Steg aufweist.

In einer Ausführungsform der erfindungsgemäßen Pflanzenschutzhülle kann vorgesehen sein, dass die Löcher aufweisenden Endes des Zuschnittes aneinander anliegen und einander überlappen.

In einer Ausführungsform der erfindungsgemäßen Pflanzenschutzhülle kann vorgesehen sein, dass an der Kupplung eine von dem rohrförmigen Körper der Pflanzenschutzhülle nach außen abstehende Einrichtung zum Befestigen eines Stabes, insbesondere eines Pflanzstabes, vorgesehen ist.

In einer Ausführungsform der erfindungsgemäßen Pflanzenschutzhülle kann vorgesehen sein, dass die Einrichtung zwei Ansätze mit Haken bildenden Vorsprüngen umfasst.

In einer Ausführungsform der erfindungsgemäßen Pflanzenschutzhülle kann vorgesehen sein, dass die Haken bildenden Vorsprünge tragenden Ansätze elastisch verformbar sind.

In einer Ausführungsform der erfindungsgemäßen Pflanzenschutzhülle kann vorgesehen sein, dass die Haken bildenden Vorsprünge aufeinander zu weisend von den Ansätzen abstehen.

In einer Ausführungsform der erfindungsgemäßen Pflanzenschutzhülle kann vorgesehen sein, dass die freien Enden der Vorsprünge voneinander Abstand haben.

In einer Ausführungsform der erfindungsgemäßen Pflanzenschutzhülle kann vorgesehen sein, dass die Einrichtung ein Ring ist und dass die Achse des Loches des Ringes zur Längserstreckung der Pflanzenschutzhülle parallel ist.

In einer Ausführungsform der erfindungsgemäßen Pflanzenschutzhülle kann vorgesehen sein, dass der Ring durch eine quer zur Längserstreckung des rohrförmigen Körpers der Pflanzenschutzhülle ausgerichtete Platte, in der ein Loch vorgesehen ist, gebildet ist.

In einer Ausführungsform der erfindungsgemäßen Pflanzenschutzhülle kann vorgesehen sein, dass der Zuschnitt mittlere Felder und Enden bildende endständige Felder aufweist und dass zwischen den Feldern Biegelinien vorliegen.

In einer Ausführungsform der erfindungsgemäßen Pflanzenschutzhülle kann vorgesehen sein, dass die endständigen Felder im Wesentlichen gleich breit sind wie die mittleren Felder.

In einer Ausführungsform der erfindungsgemäßen Pflanzenschutzhülle kann vorgesehen sein, dass das in der Pflanzenschutzhülle außen liegende endständige Feld so breit ist wie die mittleren Felder und dass das in der Pflanzenschutzhülle innen liegende endständige Feld schmäler als die mittleren Felder ist.

In einer Ausführungsform der erfindungsgemäßen Pflanzenschutzhülle kann vorgesehen sein, dass an der Kupplung zwei Klammern vorgesehen sind, deren offene Seiten voneinander weg weisen.

In einer Ausführungsform der erfindungsgemäßen Pflanzenschutzhülle kann vorgesehen sein, dass die Klammern über elastisch verformbare Streifen an einem Träger angebracht sind.

In einer Ausführungsform der erfindungsgemäßen Pflanzenschutzhülle kann vorgesehen sein, dass der äußere Schenkel der Klammern eben ausgebildet ist.

In einer Ausführungsform der erfindungsgemäßen Pflanzenschutzhülle kann vorgesehen sein, dass der innere Schenkel der Klammern mit dem äußeren Schenkel einen spitzen Winkel einschließt.

In einer Ausführungsform der erfindungsgemäßen Pflanzenschutzhülle kann vorgesehen sein, dass das freie Ende des inneren Schenkels der Klammern vom äußeren Schenkel weg abgebogen ist.

In einer Ausführungsform der erfindungsgemäßen Pflanzenschutzhülle kann vorgesehen sein, dass der innere Schenkel mit dem äußeren Schenkel der Klammern durch einen Steg verbunden ist.

In einer Ausführungsform der erfindungsgemäßen Pflanzenschutzhülle kann vorgesehen sein, dass der Steg in der Nähe des Bereiches, in dem der innere Schenkel mit dem äußeren Schenkel der Klammern verbunden ist, vorgesehen ist.

In einer Ausführungsform der erfindungsgemäßen Pflanzenschutzhülle kann vorgesehen sein, dass die Stege der Klammern an zur Längserstreckung der Pflanzenschutzhülle parallel ausgerichteten Rändern der Löcher anliegen.

In einer Ausführungsform der erfindungsgemäßen Pflanzenschutzhülle kann vorgesehen sein, dass der Träger der Klammern als Ring ausgebildet ist.

In einer Ausführungsform der erfindungsgemäßen Pflanzenschutzhülle kann vorgesehen sein, dass im Inneren des Ringes des Trägers wenigstens zwei radial ausgerichtete Zungen vorgesehen sind.

Die Erfindung bezieht sich auch auf eine Verwendung der erfindungsgemäßen Kupplung zum Befestigen einer als Mantel eines Zylinders oder Prismas ausgebildeten Pflanzenschutzhülle an einem Stab, z.B. einem Pflanzstab. Dabei kann vorgesehen sein, dass eine Kupplung verwendet wird, die zwei Klammern aufweist, deren offene Seiten voneinander weg weisen, wobei die Klammern über elastisch verformbare Streifen an einem als Ring ausgebildeten Träger angebracht sind, und wobei im Inneren des Ringes des Trägers wenigstens zwei radial nach innen weisende Zungen vorgesehen sind.

Weitere Einzelheiten und Merkmale der Erfindung ergeben sich aus der nachstehenden Beschreibung bevorzugter Ausführungsbeispiele erfindungsgemäßer Pflanzenschutzhüllen unter Bezugnahme auf die Zeichnungen. Es zeigt:
- Fig. 1: einen Zuschnitt in offenem Zustand,
- Fig. 2: teilweise und in Schrägansicht den zu einer Pflanzenschutzhülle geformten Zuschnitt aus Fig. 1,
- Fig. 3: eine Kupplung in Form einer Klammer in Gebrauchslage,
- Fig. 4: eine Pflanzenschutzhülle mit drei in ihr angesetzten Kupplungen und
- Fig. 5: eine zum Ansetzen bereitgehaltene Kupplung.

Ein Zuschnitt, aus dem eine erfindungsgemäße Pflanzenschutzhülle durch Verformen hergestellt werden kann, kann aus beliebigem, flächigem Werkstoff bestehen. Beispiele für solche Werkstoffe sind Kunststoffplatten, Platten aus Karton, Platten aus Schichtwerkstoff, umfassend Lagen aus Karton und Kunststoff, Doppel-Steg-Platten aus Kunststoff.

Die erfindungsgemäße Pflanzenschutzhülle in Form einer Röhre kann die Form des Mantels eines Zylinders oder eines Prismas aufweisen.

Beispiele für Pflanzenschutzhüllen in Form eines Prismas sind Pflanzenschutzhüllen mit der Form eines Mantels eines dreiseitigen, vierseitigen, fünfseitigen oder mehrseitigen Prismas, wobei auch Mantel von Prismen mit unterschiedlich großen (breiten) Seiten in Betracht gezogen sind.

Pflanzenschutzhüllen in Form von Zylindern, wie beispielsweise Kreiszylinder oder Zylinder mit einer von einer Kreisform abweichenden Form (z.B. Ellipse) sind erfindungsgemäß ebenfalls in Betracht gezogen.

In Betracht gezogen sind auch Pflanzenschutzhüllen in Form von Mänteln von Kegelstümpfen oder Mänteln von Pyramidenstümpfen. Beispiele sind Kegelstümpfe mit kreisförmiger Grundfläche oder einer nicht kreisförmigen, beispielsweise elliptischen, Grundfläche. Pyramidenstümpfe können dreiseitige, vierseitige, fünfseitige oder mehrseitige Pyramiden sein, wobei die Seiten gleich groß oder unterschiedlich groß sein können.

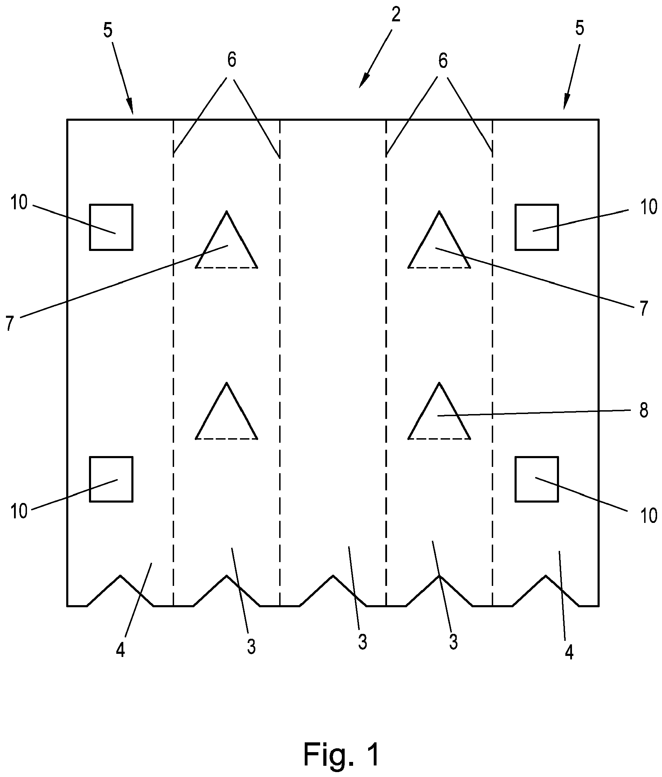

Ein in Fig. 1 gezeigter Zuschnitt 2, mit dem eine erfindungsgemäße Pflanzenschutzhülle 1 durch Verformen, insbesondere durch Biegen entlang der beispielsweise vorgeformten Biegelinien 6, gebildet werden kann, umfasst drei mittlere Felder 3 und zwei Enden 5 bildende endständige Felder 4.

In den mittleren Feldern 3 sind - wie dies für Pflanzenschutzhüllen 1 üblich ist - Anstanzungen 7 vorgesehen, so dass durch Herausbiegen der angestanzten Flächenteile 8 beispielsweise dreieckförmige Öffnungen gebildet werden können.

In dem gezeigten Ausführungsbeispiel ist der Zuschnitt 2 so ausgebildet, dass die endständigen Felder 4 gleich groß und im Wesentlichen gleich breit sind wie die mittleren Felder 3 des Zuschnittes 2. Dies ist nicht zwingend so, vielmehr genügt es, wenn wenigstens eines der endständigen Felder 4 eine Breite hat, die einer Seite des rohrförmigen Körpers der Pflanzenschutzhülle entspricht. Das andere endständige Feld 4 kann schmäler ausgebildet sein, wobei eine Breite genügt, die Platz für das wenigstens eine Loch 10 für die Aufnahme der Kupplung 12, die den Zuschnitt 2 in Form des rohrförmigen Körpers der Pflanzenschutzhülle 1 hält, gibt.

In einer ebenfalls in Betracht gezogenen Ausführungsform sind beide endständigen Felder 4 schmal, beispielsweise schmäler als die mittleren Felder 3, ausgebildet. Die Löcher 10 in den endständigen Feldern 4 sind - bei einer prismaförmigen oder pyramidenstumpfförmigen Pflanzenschutzhülle 1 - so angeordnet, dass die miteinander verbundenen endständigen Felder 4 eine Breite der zwischen den benachbarten Biegelinien 6 liegenden Seitenfläche der Pflanzenschutzhülle 1 ergeben, die der gewünschten Breite, beispielsweise der Breite mittlerer Felder 3, entspricht.

Bei einer zylinderförmigen Pflanzenschutzhülle 1 sind die Löcher 10 in den Bereichen der Enden 5 des Zuschnittes 2 bevorzugt so angeordnet, dass die Pflanzenschutzhülle 1 die gewünschte lichte Weite - bei einer kreiszylindrischen Pflanzenschutzhülle 1 den gewünschten Durchmesser - hat, wenn der Zuschnitt 2 zur Pflanzenschutzhülle 1 verformt und mit Hilfe von wenigstens einer Kupplung 12 geschlossen ist.

Die in beiden endständigen Feldern 4 vorgesehenen Löcher 10 haben im gezeigten Ausführungsbeispiel eine quadratische Form.

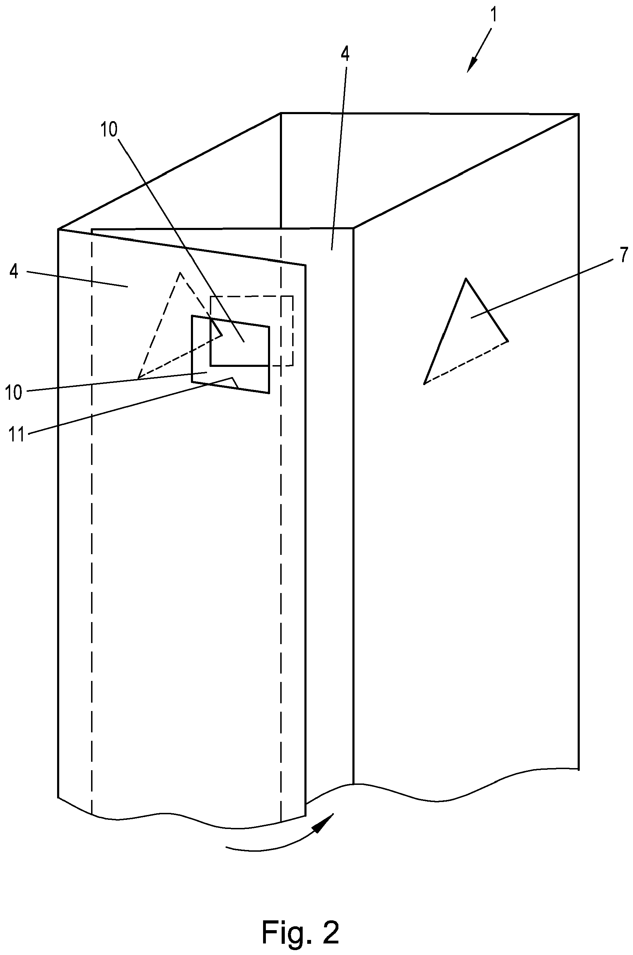

Die Löcher 10 in den endständigen Feldern 4 sind so angeordnet, dass sie - wie dies in Fig. 2 angedeutet ist - miteinander fluchten, wenn der Zuschnitt 2 zu einer Pflanzenschutzhülle 1 in Form einer Röhre mit der Form des Mantels eines vierseitigen Prismas geschlossen ist.

Die Anzahl der Löcher 10 in den endständigen Feldern 4 richtet sich nach der Länge (Höhe) der fertigen Pflanzenschutzhülle 1, wobei insbesondere zwei oder mehr als zwei Löcher 10 je Feld 4 bevorzugt sind.

Um die endständigen Felder 4 in Anlage aneinander zu halten und damit den Zuschnitt 2 zu einer Pflanzenschutzhülle 1 in Form einer Röhre zu halten, werden in die Löcher 10 Kupplungen 12 eingesetzt.

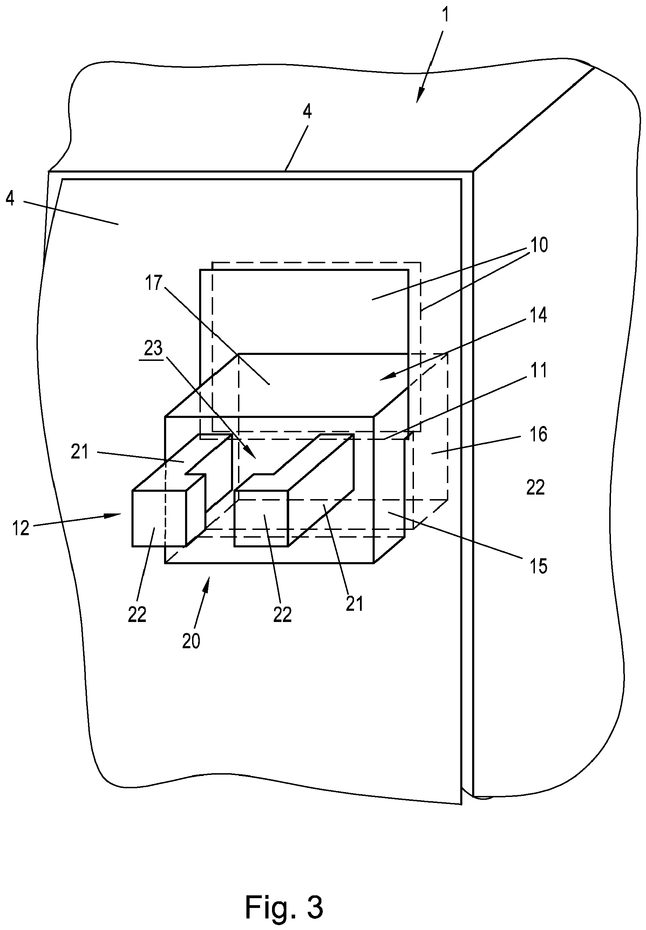

Solche Kupplungen 12 sind in dem in Fig. 3 gezeigten Ausführungsbeispiel als Klammern 14 ausgebildet.

Jede Klammer 14 hat einen an der Außenseite des rohrförmigen Körpers der Pflanzenschutzhülle 1 anliegenden Schenkel 15 und einen an der Innenseite des rohrförmigen Körpers anliegenden Schenkel 16, wobei die Schenkel 15 und 16 miteinander über einen Steg 17 verbunden sind, der in der Wirklage (Fig. 3) an den unteren Rändern 11 der miteinander fluchtenden Löcher 10 in dem Zuschnitt 2 anliegt.

Die der Wand der Pflanzenschutzhülle 1 zugekehrten Flächen der Schenkel 15 und 16 liegen an der Außenseite bzw. der Innenseite des rohrförmigen Körpers, welcher die Pflanzenschutzhülle 1 bildet, an.

Es kann vorgesehen sein, dass an den einander zugekehrten und in Gebrauchslage an dem Körper der Pflanzenschutzhülle 1 anliegenden Flächen der Schenkel 15 und 16 der Klammer 14 reibungserhöhende Vorsprünge vorgesehen sind, um den Sitz der Klammer 14, welche als Kupplung 12 dient, zu verbessern.

Insbesondere ist vorgesehen, dass die Schenkel 15 und 16 bzw. die an diesen gegebenenfalls vorgesehen Vorsprünge unter Vorspannung, die durch Verformen der Schenkel 15 und 16 im elastischen Bereich entsteht, an der Wand der Pflanzenschutzhülle 1 anliegen.

Von der Außenseite des äußeren Schenkels 15 der Klammer 14 steht (Fig. 3) eine Einrichtung 20 zum Befestigen eines Stabes, insbesondere eines Pflanzstabes, ab.

Diese Einrichtung 20 kann in einer nicht gezeigten Ausführungsform als Platte vorgesehen sein, die von dem äußeren Schenkel 15 der Klammer 14 nach außen absteht und im Wesentlichen quer zur Längserstreckung der Pflanzenschutzhülle 1 ausgerichtet ist. In der Platte ist ein Loch vorgesehen, in das ein Stab, insbesondere ein Pflanzstab, eingeführt werden kann. Alternativ kann die Pflanzenschutzhülle 1 an einem Stab, insbesondere ein Pflanzstab, befestigt werden, indem die Einrichtung 20 über den Stab gesteckt wird. Wenn der Stab im Erdreich befestigt, z.B. hineingesteckt oder hineingeschlagen, worden ist, ist die Lage der Pflanzenschutzhülle gesichert 1 und diese kann durch Wind oder sonstige Umwelteinwirkungen nicht verlagert werden.

In dem in Fig. 3 gezeigten Ausführungsbeispiel besitzt die Klammer 14 an der Außenseite ihres äußeren Schenkels 15 als Einrichtung 20 zwei hakenförmige Ansätze 21, die Vorsprünge 22, die aufeinander zu weisen, aufweisen. Durch die Vorsprünge 22 wird ein Aufnahmeraum 23 für einen Stab begrenzt.

Wenn eine erfindungsgemäße Pflanzenschutzhülle 1 mit einer in Fig. 3 gezeigten, als Kupplung 12 dienenden Klammer 14 an einem Stab, insbesondere einem Pflanzstab, zu befestigen ist, kann die Klammer 14 mit ihrer Einrichtung 20 in Form der zwei Ansätze 21 mit Haken bildenden Vorsprüngen 22 auf dem Pflanzstab aufgerastet werden, indem die Vorsprünge 22 unter elastischem Verformen der Ansätze 21 auseinanderbewegt und dann wieder in ihre ursprüngliche Lage, die den Stab festhält, zurückfedern.

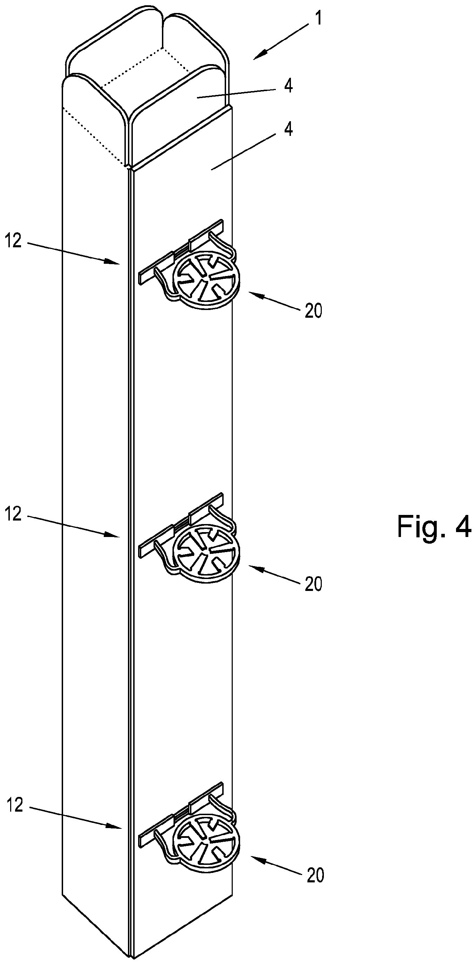

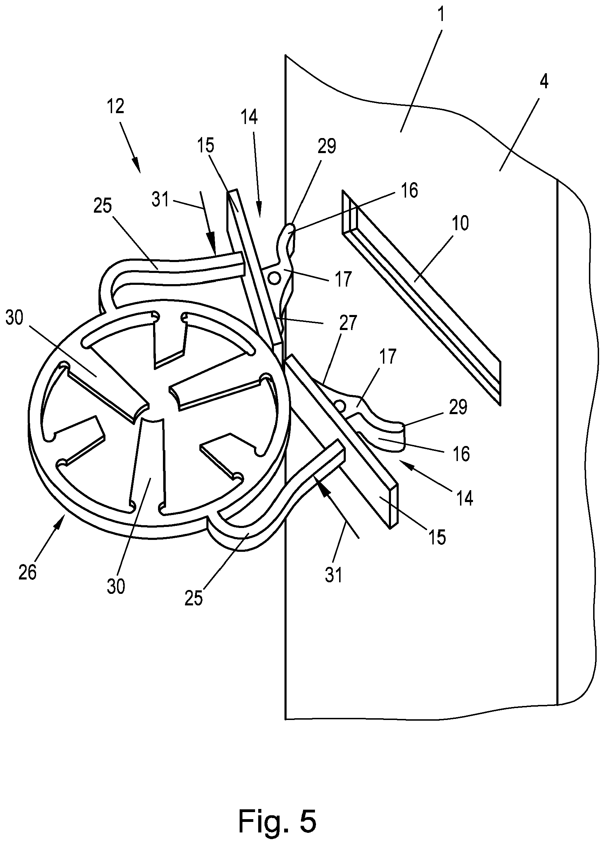

Eine praktische Ausführungsform einer Kupplung 12 mit zwei Klammern 14 ist nachstehend anhand der Fig. 4 und 5 beschrieben.

Die in Fig. 4 und 5 gezeigte Kupplung 12 umfasst zwei Klammern 14, die über elastische Streifen 25 an einem Träger 26 angebracht sind.

Die Klammern 14 der in Fig. 4 und 5 gezeigten Ausführungsform umfassen den ersten, äußeren Schenkel 15, an dem die Streifen anschließen und den zweiten, inneren Schenkel 16, der mit dem ersten Schenkel 15 einen im Wesentlichen spitzen Winkel einschließt. Durch diese Anordnung der Schenkel 15 und 16 der Klammern 14 ergibt sich wegen der Keilwirkung ein sicheres Aneinanderpressen der endständigen Felder 4 des Zuschnittes 2. Zur Versteifung und zum besseren Halt der Klammer 14 sind die Schenkel 15, 16 (der innere Schenkel 15 und der äußere Schenkel 16) mit Abstand von der Stelle 27, in dem sie ineinander übergehen, durch den Steg 17 verbunden.

Das freie Ende 29 des inneren Schenkels 16 der Klammer 14 ist gebogen, sodass das Einführen des inneren Schenkels 16 (vgl. Fig. 4) in die Löcher 10 einfacher und sicherer möglich ist, um ein Spannen der die Löcher 10 aufweisenden endständigen Felder 4 des eine Pflanzenschutzhülle 1 bildenden Zuschnitts 2 zu erreichen.

Bei der in den Fig. 4 und 5 gezeigten Ausführungsform sind die Löcher 10 in den endständigen Feldern 4 als Langschlitze ausgebildet und haben eine Abmessung, die das Einführen der inneren Schenkel 16 durch die Löcher 10 in den endständigen Feldern 4 erlauben.

Der Träger 26, an dem die Streifen 25, vorzugsweise einstückig, enden, ist im gezeigten Ausführungsbeispiel als Ring ausgebildet, in dessen Inneres mehrere radial ausgerichtete Zungen 30 ragen.

Der Träger 26 dient bei der Ausführungsform der Fig. 4 und 5 als Einrichtung 20 zum Befestigen eines Stabes, insbesondere eines Pflanzstabes, indem der Pflanzstab durch den Ring des Trägers 26 gesteckt und von den Zungen 30 unter elastischem Verformen derselben gehalten ist.

Alternativ ist es möglich, die Pflanzenschutzhülle 1 mit angesetzten Kupplungen 12 so an einem Pflanzstab zu befestigen, dass die Pflanzenschutzhülle 1 mit den als Ringe ausgebildeten Trägern 26 über einen bereits in den Boden gesteckten Pflanzstab gefädelt wird.

Wenn eine Pflanzenschutzhülle mit den in den Fig. 4 und 5 gezeigten Kupplungen von oben her auf einen bereits im Boden verankerten Pflanzstab geschoben wird, biegen sich die Zungen 30 in dem als Träger 26 dienenden Ring nach oben und legen sich - ein Verschieben nach oben hemmend - an den Pflanzstab an. So wird verhindert, dass Tiere die Pflanzenschutzhülle 1 nach oben schieben, um Zugang zu der an sich geschützten Pflanze zu haben.

Bevorzugt ist im Rahmen der Erfindung vorgesehen, dass die Klammern 14 der in den Fig. 4 und 5 gezeigten Ausführungsform einer erfindungsgemäßen Kupplung 12 eine in Richtung der Längserstreckung der Pflanzenschutzhülle 1 gemessene Stärke haben, die im Wesentlichen gleich groß ist wie die in Richtung der Längserstreckung der Pflanzenschutzhülle 1 gemessene Höhe der miteinander fluchtenden Löcher 10 in den Enden 5 des Zuschnittes 1. So wird ein besonders sicherer Sitz der in den Fig. 4 und 5 gezeigten Ausführungsform einer Kupplung an der geschlossenen Pflanzenschutzhülle gewährleistet.

Die in den Fig. 4 und 5 gezeigte Ausführungsform einer Kupplung 12 einer Pflanzenschutzhülle 1 ist bevorzugt ein einstückiger Spritzgussteil aus elastischem Werkstoff, insbesondere elastischem Kunststoff, sodass er nicht nur einfach herzustellen, sondern auch robust ist, und mehrfach verwendet werden kann.

Zum Einsetzen der in den Fig. 4 und 5 gezeigten Kupplung 12 zum Schließen eines Zuschnittes 2 zu einer Pflanzenschutzhülle 1 genügt es, die Streifen 25 aufeinander zu zu belasten (Pfeile 31 in Fig. 5), sodass sich auch die an diesen vorgesehenen Klammern 14 aufeinander zu bewegen, und zwar so weit, dass die inneren Schenkel 16 der Klammern 14 durch die Löcher 10 in den endständigen Feldern 4 des Zuschnittes 2 gesteckt werden können. Darauf werden die Streifen 25 losgelassen, sodass sie zurückfedern und sich die Klammern 14 voneinander weg in ihre Wirkstellung bewegen, in der sie die endständigen Felder 4 in Anlage aneinander halten, sodass der Zuschnitt 2 zu der Pflanzenschutzhülle 1 geschlossen ist. Wenn eine Kupplung 12 in die Löcher 10 eingesetzt ist, werden die Stege 17 der Klammern 14 mit Vorspannung gegen die parallel zur Längserstreckung ausgerichteten Ränder der Löcher 10 gedrückt. Diese Vorspannung wird von den im elastischen Bereich gebogenen Streifen 25 aufgebracht.

Die in Fig. 3 und in den Fig. 4 und 5 gezeigten Ausführungsformen der erfindungsgemäßen Kupplungen 12, die mit einer Einrichtung 20 zum Befestigen an einem Stab, z.B. einem Pflanzstab, versehen sind, können auch dazu verwendet werden, eine Pflanzenschutzhülle in Form einer Röhre oder eine bereits zu einer Röhre geschlossene Pflanzenschutzhülle an einem Stab, z.B. einem Pflanzstab, zu befestigen.

Bei dieser Anwendung wird die Kupplung 12 in einem Loch einer geschlossenen Pflanzenschutzhülle festgelegt und die Pflanzenschutzhülle dann mit Hilfe der Einrichtung 20, die von der Pflanzenschutzhülle nach außen absteht, an einem Stab, z.B. einem Pflanzstab, festgelegt.

Die in den Fig. 4 und 5 gezeigte Ausführungsform einer Kupplung 12 kann auch dazu verwendet werden, Pflanzenschutzhüllen, die Röhren von Zylindern oder Prismen sind, an einem Stab, wie einem Pflanzstab, zu befestigen. Dazu ist in der Pflanzenschutzhülle, die beispielsweise aus Gitterwerkstoff besteht (Baumschutzgitter), ein Loch entsprechend dem Loch 10 vorgesehen. In dieses Loch der Pflanzenschutzhülle kann eine Kupplung 12 mit ihren beiden Klammern 14, wie dies zuvor beschrieben worden ist, eingesetzt werden. Die so mit Kupplungen 12 versehene Pflanzenschutzhülle kann dann beispielsweise von oben her mit dem als Ring ausgebildeten Träger 26 der Kupplung 12 über einen bereits im Boden verankerten Pflanzstab geschoben werden. Bei dieser Verwendung der Kupplung 12 gemäß den Fig. 4 und 5 ergibt sich der vorteilhafte Effekt, dass die Zungen 30 des Trägers 26 nach oben verbogen werden und ein nach oben Schieben der Pflanzenschutzhülle, die über wenigstens eine Kupplung 12 an einem Stab, wie einem Pflanzstab, befestigt ist, verhindert wird.

Von Vorteil ist bei der Anwendung der in den Fig. 4 und 5 gezeigten Ausführungsform der Kupplung 12, dass die Stege 17 der Klammern 14 unter Vorspannung, die durch die im elastischen Bereich verformten Streifen 25 bewirkt wird, an den parallel zur Längserstreckung der geschlossenen Pflanzenschutzhülle verlaufenden Rändern des Loches anliegen. So wird ein sicherer Sitz der Kupplung 12 und damit ein sicheres Festlegen der Pflanzenschutzhülle an einem Pflanzstab erreicht.

Zusammenfassend kann ein Ausführungsbeispiel der Erfindung wie folgt beschrieben werden:
Eine Pflanzenschutzhülle 1 in Form eines rohrförmigen Körpers besteht aus einem Zuschnitt 2 aus blattförmigem Werkstoff, dessen Enden 5 zum Bilden des rohrförmigen Körpers miteinander verbunden sind. Um die Enden 5 des Zuschnittes 2 miteinander zu verbinden, sind Kupplungen 12 in Form von Klammern 14 vorgesehen, die durch miteinander fluchtende Löcher 10 in den Enden 5 des Zuschnittes 1 greifen. Ein Schenkel 15 der Klammer 14 liegt von innen her an der Wand der Pflanzenschutzhülle 1 an. Der andere Schenkel 16 der Klammer 14 liegt an der Außenseite der Wand der Pflanzenschutzhülle 1 an. An dem äußeren Schenkel 15 ist eine Einrichtung 20 zum Befestigen der Kupplung 12 und damit der Pflanzenschutzhülle 1 an einem Stab, insbesondere einem Pflanzstab, vorgesehen. Die Einrichtung 20 ist so ausgebildet, dass sie es erlaubt, dass die Kupplung 12, und damit die Pflanzenschutzhülle, durch Aufschnappen mit dem Stab, insbesondere dem Pflanzstab, verbunden wird.

## Patentansprüche

1. Pflanzenschutzhülle (1), umfassend einen rohrförmigen Körper, der aus wenigstens einem Zuschnitt (2) aus blattförmigem Werkstoff besteht, wobei Enden (5) des Zuschnittes (2) miteinander unter Bilden des rohrförmigen Körpers verbunden sind, **dadurch gekennzeichnet, dass** in den Bereichen der miteinander verbundenen Enden (5) des Zuschnittes (2) wenigstens je ein Loch (10) vorgesehen ist, dass die Löcher (10) miteinander fluchten und dass in die Löcher (10) eine Kupplung (12), die die Enden (5) miteinander verbindet, eingesetzt ist.

2. Pflanzenschutzhülle nach Anspruch 1, **dadurch gekennzeichnet, dass** über die Längserstreckung der Pflanzenschutzhülle (1) verteilt im Bereich der Enden (5) des Zuschnittes (2) je wenigstens zwei Löcher (10) vorgesehen sind.

3. Pflanzenschutzhülle nach Anspruch 1 oder 2, **dadurch gekennzeichnet, dass** die Kupplung (12) nach Art einer Klammer (14) ausgebildet ist.

4. Pflanzenschutzhülle nach Anspruch 3, **dadurch gekennzeichnet, dass** die Klammer (14) einen an der Außenseite des rohrförmigen Körpers der Pflanzenschutzhülle (1) anliegenden Schenkel (15), einen an der Innenseite des rohrförmigen Körpers der Pflanzenschutzhülle (1) anliegenden Schenkel (16) und einen an den Rändern (11) der Löcher (10) anliegenden Steg (17) aufweist.

5. Pflanzenschutzhülle nach einem der Ansprüche 1 bis 4, **dadurch gekennzeichnet, dass** die Löcher (10) aufweisenden Enden (5) des Zuschnittes (2) aneinander anliegen und einander überlappen.

6. Pflanzenschutzhülle nach einem der Ansprüche 1 bis 5, **dadurch gekennzeichnet, dass** an der Kupplung (12) eine von dem rohrförmigen Körper der Pflanzenschutzhülle (1) nach außen abstehende Einrichtung (20) zum Befestigen eines Stabes, insbesondere eines Pflanzstabes, vorgesehen ist.

7. Pflanzenschutzhülle nach Anspruch 6, **dadurch gekennzeichnet, dass** die Einrichtung (20) ein Ring ist und dass die Achse des Loches des Ringes zur Längserstreckung der Pflanzenschutzhülle (1) parallel ist.

8. Pflanzenschutzhülle nach einem der Ansprüche 1 bis 7, **dadurch gekennzeichnet, dass** an der Kupplung (12) zwei Klammern (14) vorgesehen sind, deren offene Seiten voneinander weg weisen.

9. Pflanzenschutzhülle nach Anspruch 8, **dadurch gekennzeichnet, dass** die Klammern (14) über elastisch verformbare Streifen (25) an einem Träger (26) angebracht sind.

10. Pflanzenschutzhülle nach Anspruch 8 oder 9, **dadurch gekennzeichnet, dass** der äußere Schenkel (15) der Klammern (14) eben ausgebildet ist.

11. Pflanzenschutzhülle nach einem der Ansprüche 8 bis 10, **dadurch gekennzeichnet, dass** der innere Schenkel (16) der Klammern (14) mit dem äußeren Schenkel (15) einen spitzen Winkel einschließt.

12. Pflanzenschutzhülle nach einem der Ansprüche 8 bis 11, **dadurch gekennzeichnet, dass** der innere Schenkel (16) mit dem äußeren Schenkel (15) der Klammern (14) durch einen Steg (17) verbunden ist.

13. Pflanzenschutzhülle nach Anspruch 12, **dadurch gekennzeichnet, dass** die Stege (17) der Klammern (14) an zur Längserstreckung der Pflanzenschutzhülle (1) parallel ausgerichteten Rändern der Löcher (10) anliegen.

14. Pflanzenschutzhülle nach Anspruch 12 oder 13, **dadurch gekennzeichnet, dass** der Träger (26) der Klammern (14) als Ring ausgebildet ist.

15. Pflanzenschutzhülle nach Anspruch 14, **dadurch gekennzeichnet, dass** im Inneren des Ringes des Trägers (26) wenigstens zwei radial ausgerichtete Zungen (30) vorgesehen sind.
